# FASCICULE DE BREVET EUROPEEN

(11) **EP 2 697 075 B1**
(45) Date de publication et mention de la délivrance du brevet: **01.06.2016**
(21) Numéro de dépôt: 12713165.4
(22) Date de dépôt: 12.04.2012
(51) Int. Cl.: B44C 1/10, B44C 3/02, B44C 5/04

(54) **PROCÉDÉ DE REVÊTEMENT D'UN ÉLÉMENT PAR UNE COUCHE DE REVÊTEMENT**
VERFAHREN ZUM BESCHICHTEN EINES ELEMENTS MIT EINER DECKSCHICHT
METHOD FOR COATING AN ELEMENT WITH A COATING LAYER

(30) Priorité: 12.04.2011 FR 1153184
(43) Date de publication de la demande: 19.02.2014
(73) Titulaire: Faurecia Intérieur Industrie, 92000 Nanterre (FR)
(72) Inventeur: DURAND, Nathalie, F-95800 Cergy (FR); PICCIN, Hugo, F-75019 Paris (FR)
(74) Mandataire: Blot, Philippe Robert Emile
(86) Numéro de dépôt international: PCT/EP2012/056648
(87) Numéro de publication internationale: WO 2012/140119

(56) Documents cités:
- DE-A1- 10 105 179
- DE-C1- 10 025 360
- FR-A1- 2 929 880
- US-A- 3 737 365

## Description

La présente invention concerne un procédé de revêtement d'une surface d'un élément de support par une couche de matériau ligneux pour former un élément de garnissage.

Elle s'applique entre autre pour réaliser des éléments de garnissage, pour véhicules automobiles, tels que des panneaux de porte ou de garnissage d'une planche de bord, ou comme revêtements décoratifs dans un grand nombre d'autres applications.

FR 2 929 880, par exemple, concerne un procédé de revêtement d'une surface d'un élément de support par une couche de matériau ligneux pour former un élément de garnissage de véhicule automobile, dans lequel l'élément de support et la couche sont chacun disposé sur une partie d'un moule de compression. La couche de matériau ligneux est fixée par des crochets à l'une des parties du moule. Ensuite, la partie portant l'élément de support est déplacée vers la partie portant la couche afin de presser l'élément de support et la couche l'un contre l'autre pour obtenir l'élément de garnissage.

Dans ce procédé, la couche de matériau ligneux doit adopter la forme de l'une des parties du moule lorsqu'elle est disposée sur cette partie du moule. Cependant, il présente l'inconvénient qu'en fonction de la forme tridimensionnelle à adopter, le positionnement de la couche de matériau ligneux sur l'une des parties du moule est difficile et le risque existe que, lors du procédé de revêtement, la couche de matériau ligneux est mal mise en contact avec ou mal positionnée par rapport à l'élément de support. Or un mauvais positionnement de la couche de matériau ligneux entraîne des défauts de l'aspect esthétique de l'élément de garnissage produit par le procédé, tels qu'une mauvaise orientation de la couche de matériau ligneux par rapport à l'élément de support ou des craquelures dans la couche de matériau ligneux à proximité des points de fixation du matériau ligneux dans le moule. Ces défauts font que l'élément ne peut plus être utilisé dans un véhicule, ce qui entraîne des surcoûts de production.

DE 100 25 360 C1 montre un tel procédé.

Un but de la présente invention est de pallier cet inconvénient et de proposer un procédé qui garantit que la couche de matériau ligneux est orientée correctement par rapport à l'élément de support lors de la mise en contact de ceux-ci afin d'obtenir un élément de garnissage ayant un aspect satisfaisant.

A cet effet, l'invention a pour objet un procédé de revêtement selon la revendication 1.

Le procédé selon l'invention présente l'avantage que le positionnement correct de la couche par rapport à l'élément de support est réalisé de façon simple et peu coûteuse.

Selon l'invention:
- la couche de matériau ligneux est fixée à une première partie d'un outil de formage d'un élément de garnissage au moyen de la zone prédécoupée de sorte à maintenir la couche de matériau ligneux en place par rapport à la première partie de l'outil de formage, et selon d'autres modes de réalisation:
- la première partie de l'outil de formage comporte des moyens de fixation et la zone prédécoupée comporte une ouverture adaptée pour coopérer avec l'un des moyens de fixation,
- un moyen de fixation présente une forme sensiblement complémentaire de celle de l'ouverture, le diamètre dudit moyen de fixation étant supérieur ou égal au diamètre de l'ouverture,
- la couche de matériau ligneux est souple et adaptée pour adopter la forme tridimensionnelle de la surface de l'élément de support à revêtir,
- la couche de matériau ligneux est fixée à la surface de l'élément de support par compression ou par thermocompression,
- chaque zone prédécoupée se trouve en dehors d'une zone de revêtement de la couche de matériau ligneux, la zone de revêtement étant destinée à revêtir tout ou partie de l'élément de support,
- des zones prédécoupées sont enlevées de la couche de matériau ligneux après fixation de la couche de matériau ligneux à la surface de l'élément de support,
- chaque zone prédécoupée n'est pas enlevée de la couche de matériau ligneux après fixation de la couche de matériau ligneux à la surface de l'élément de support,
- la zone prédécoupée présente une forme d'oreille séparée de la zone de revêtement par deux fentes, la zone prédécoupée étant reliée à la zone de revêtement par une zone de connexion s'étendant entre les fentes, et
- la couche de matériau ligneux est une couche à base d'un matériau lignocellulosique, un complexe lignocellulosique ou un revêtement comprenant une pluralité de couches à base de matériaux lignocellulosiques.

L'invention sera mieux comprise à la lecture de la description qui va suivre, donnée uniquement à titre d'exemple et faite en se référant aux dessins annexés, sur lesquels :
- la figure 1 est une vue schématique de face d'une couche de matériau ligneux adaptée pour la mise en oeuvre du procédé de revêtement selon l'invention ; et
- la figure 2 est une vue schématique en coupe de la couche de matériau ligneux de la figure 1 et d'un élément de support fixés à une première et une seconde partie d'un outil de formage, respectivement.

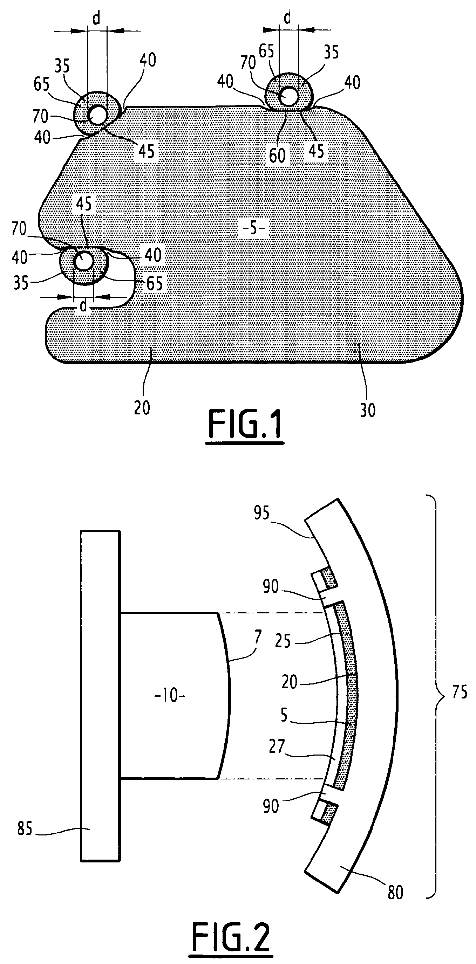

Sur la figure 1 est représentée une couche de matériau ligneux désignée par la référence 5. La couche 5 présente une épaisseur sensiblement comprise entre 0,1 et 2 mm. La couche 5 est destinée à revêtir entièrement une surface 7 d'un élément de support 10 pour former un élément de garnissage. En variante, la couche 5 est destinée à revêtir partiellement la surface 7. La surface 7 présente une forme tridimensionnelle complexe telle qu'une surface non développable. Par forme tridimensionnelle, on entend que la surface 7 s'étend en largeur, en hauteur et en profondeur. La couche 5 comporte une surface visible 20 et une surface de contact 25 (non visible sur la figure 1). La surface visible 20 est celle qui sera visible de l'élément de garnissage lorsque l'élément de garnissage est utilisé par exemple pour garnir une porte ou une planche de bord de véhicule automobile.

La couche 5 de matériau ligneux est souple et adaptée pour adopter, sous contrainte mécanique, la forme tridimensionnelle de la surface 7 de l'élément de support 10 à revêtir.

La couche 5 de matériau ligneux est une couche à base d'un matériau lignocellulosique, une feuille de bois, un complexe lignocellulosique ou un revêtement comprenant une pluralité de couches à base de matériaux lignocellulosiques.

En variante, la couche 5 de matériau ligneux comporte sur sa surface de contact 25 un support souple 27, tel qu'une matière textile, un papier ou une feuille de caoutchouc. Le support souple 27 peut comporter une surface adhésive orientée à l'opposé de la couche 5 et se trouvant en regard de l'élément de support 10.

La couche 5 comporte une zone de revêtement 30 et au moins une zone prédécoupée 35. Lorsque l'élément de garnissage est réalisé, au moins une partie de la zone de revêtement 30 est visible depuis l'extérieur de l'élément et forme au moins une partie de la surface externe de cet élément. La zone prédécoupée 35 n'est quant à elle pas visible lorsque l'élément de garnissage est réalisé. De préférence, la couche 5 comporte plusieurs zones prédécoupées 35.

Les zones prédécoupées 35 sont agencées à la périphérie de la zone de revêtement 30. Entre chaque zone prédécoupée 35 et la zone de revêtement 30 sont pratiquées deux fentes 40. Les fentes 40 sont pratiquées dans la couche 5 de sorte à laisser une zone de connexion 45 entre les deux fentes 40.

La zone de connexion 45 relie la zone prédécoupée 35 à la zone de revêtement 30. La zone de connexion 45 présente une largeur 60 représentée par une ligne hachée sur la figure 1, la largeur 60 étant choisie en fonction de la nature de la couche 5 de matériau ligneux et de son épaisseur. La largeur 60 est adaptée pour laisser une flexibilité entre la zone de revêtement 30 et la zone prédécoupée 35. Mais aussi un allongement entre la zone de revêtement 30 et la zone prédécoupée 35 permettrait de garantir un maintien souple entre la zone de revêtement 30 et la zone prédécoupée 35 pendant l'opération de formage. La largeur 60 est sensiblement comprise entre 0,1 et 10 mm, et de préférence entre 1 et 5 mm.

Les fentes 40 présentent par exemple une forme de V. La largeur de la fente 40 diminue donc en allant de la périphérie de la couche 5 vers la zone de connexion 45.

Chaque zone prédécoupée 35 se présente sous forme d'une oreille percée 65 comportant une ouverture centrale 70. L'ouverture centrale 70 présente un diamètre d (représenté sur la figure 1) sensiblement compris entre 5 et 10 mm, de préférence un diamètre égal à 6 mm. L'oreille percée 65 forme ainsi une oreille de fixation.

La zone de revêtement 30 est adaptée pour revêtir entièrement la surface 7 de l'élément de support 10. La zone de revêtement 30 présente donc une forme de périphérie analogue à celle de la surface 7. Les oreilles 65 ne sont donc pas destinées à venir en contact avec la surface 7 de l'élément de support 10.

En variante, la zone de revêtement 30 présente une forme variable selon l'esthétique de l'élément de garnissage à obtenir et est adaptée pour revêtir partiellement la surface 7, la couche 5 de matériaux ligneux formant un décor local sur l'élément de support 10.

L'élément de support 10 est par exemple une pièce en matière plastique.

Un premier mode de réalisation du procédé de revêtement selon l'invention va maintenant être décrit.

Le procédé comporte les trois étapes successives suivantes: a) prédécouper la couche 5 de revêtement de sorte à former au moins une zone prédécoupée 35 dans la couche 5 de matériau ligneux, b) positionner la couche 5 de matériau ligneux par rapport à l'élément de support 10 au moyen de la zone prédécoupée 35, et c) fixer la couche 5 de matériau ligneux à la surface 7 de l'élément de support 10.

L'étape a) consiste à couper les fentes 40 dans la couche 5 de matériau ligneux de sorte à former la zone de revêtement 30 et la zone prédécoupée 35. De préférence, plusieurs zones prédécoupées 35 sont formées. Les zones prédécoupées 35 sont agencées autour de la zone de revêtement 30. Chaque zone prédécoupée 35 est percée de sorte à former l'ouverture centrale 70. Les zones prédécoupées 35 sont disposées autour de la zone de revêtement 30 de sorte à permettre un maintien stable et efficace de la couche 5 dans un outil de formage comme décrit ci-dessous.

Les étapes b) et c) sont réalisées à l'aide d'un outil de formage 75 d'un élément de garnissage. L'outil de formage 75 est par exemple un moule de compression. L'outil de formage 75 comporte une première partie 80 et une seconde partie 85. La première partie 80 est adaptée pour recevoir la couche 5 de matériau ligneux. La première partie 80 comporte ainsi des moyens de fixation 90 adaptés pour coopérer avec les ouvertures 70 des zones prédécoupées 35. Chaque moyen de fixation 90 est par exemple un ergot de forme sensiblement complémentaire à celle d'une ouvertures 70. Le diamètre de cet ergot est par exemple supérieur ou égal au diamètre d'une ouvertures 70 de sorte à assurer un maintien en force de la couche de matériau ligneux par rapport à la première partie du moule 80 par enfoncement des zones prédécoupées sur les ergots. La première partie 80 comporte une surface de réception 95 présentant une forme tridimensionnelle sensiblement identique à celle de la surface 7 de l'élément de support 10. La seconde partie 85 est adaptée pour recevoir l'élément de support 10 et présente une forme complémentaire de la première partie 80.

L'outil de formage peut par exemple être tel que décrit dans le document FR 2 929 880.

L'étape b) consiste à fixer la couche 5 à la première partie 80 de l'outil de formage 75. Chaque zone prédécoupée 35 coopère avec l'un des moyens de fixation 90 de sorte à maintenir la couche 5 de matériau ligneux en place par rapport à la première partie 80 de l'outil de formage 75 et à orienter la couche 5 par rapport à la surface 7 de l'élément de support 10 (voir figure 2).

L'étape b) consiste en outre à fixer l'élément de support 10 à la seconde partie 85 de l'outil de formage 75 de telle sorte que la surface 7 est orientée vers la première partie 80 de l'outil de formage 75. L'orientation de la couche 5 par rapport à l'élément de support 10 est donc déterminée.

L'étape c) consiste à déplacer la seconde partie 85 portant l'élément de support 10 vers la première partie 80 portant la couche 5 de sorte à fixer la couche 5 de matériau ligneux sur la surface 7 de l'élément de support 10 par compression. La couche 5 vient en contact avec l'élément de support 10 selon l'orientation prédéterminée et la couche 5 adopte la forme tridimensionnelle de la surface de réception 95 de la première partie 80 de l'outil de formage 75 et donc celle de la surface 7 de l'élément de support 10.

Le fait de fixer la couche 5 uniquement par les zones prédécoupées 35 permet de maintenir et d'orienter la couche 5 de façon efficace et stable, tout en permettant à la zone de revêtement 30 de garder sa souplesse, de sorte que cette zone de revêtement 30 épouse intimement la forme de l'élément de support 10 lors de la compression. En effet, la zone de revêtement 30 n'est pas fixée à la première partie 80 de l'outil de formage 75 et peut donc se déplacer et se déformer par rapport à celle-ci. En particulier, la faible largeur de la zone de connexion 45 permet la déformation de la zone de revêtement 30 par rapport à la zone prédécoupée 35. Ceci permet un bon positionnement de la couche 5 dans l'outil de formage 75 tout en garantissant un revêtement satisfaisant de l'élément de support 10.

En variante, la première partie 80 portant la couche 5 est déplacée vers la seconde partie 85 portant l'élément de support 10.

En variante encore, la couche 5 de marériau ligneux est fixée sur la surface 7 de l'élément de support 10 par thermocompression.

Après fixation de la couche 5 sur la surface 7 de l'élément de support 10, la seconde partie 85 est écartée de la première partie 80. La cohésion entre la couche 5 et l'élément de support 10 étant plus forte que la résistance entre les moyens de fixation 90 et les ouvertures 70 des zones prédécoupées 35, la seconde partie 85 de l'outil de formage 75 porte l'élément de support 10 revêtu de la couche 5 sur sa surface 7. En variante, un opérateur peut décrocher les zones prédécoupées 35 des moyens de fixation 90.

Dans une étape d) les zones prédécoupées 35 sont enlevées de la couche 5 après fixation de la couche 5 sur la surface 7 de l'élément de support 10, par exemple par découpe des zones prédécoupées 35. En variante, les zones prédécoupées 35 peuvent se détacher d'elles-mêmes lors de l'opération de formage de la couche 5 et de l'élément de support 10 du fait des contraintes appliquées sur ladite couche 5 par l'outil de formage. Selon une autre variante, les zones prédécoupées 35 ne sont pas enlevées de la couche 5 et sont destinées à être masquées par d'autres pièces d'aspect ou des pièces voisines de l'élément de garnissage réalisé.

L'enlèvement des zones prédécoupées 35 évite qu'elles n'interfèrent pas avec des éléments de structure lors du montage de l'élément de garnissage sur le véhicule. Toutefois, il peut s'avérer préférable de laisser en place une ou plusieures zones prédécoupées 35, par exemple pour maintenir l'élément de garnissage lors d'une étape suivante, mais aussi pour constituer un moyen de détrompage ou poka-yoke ou zone de marquage.

L'élément de support 10 revêtu de la couche 5 est démoulé de l'outil de formage 75. L'élément de garnissage est ainsi prêt pour l'emploi.

En variante, l'élément de support 10 n'est pas revêtu par une seule couche 5 de matériau ligneux, mais par plusieurs couches 5, chaque couche 5 revêtant partiellement l'élément de support 10. Dans cette variante, l'ensemble des couches 5 peut revêtir entièrement ou partiellement l'élément de support 10.

Dans un deuxième mode de réalisation, qui diffère du premier mode de réalisation uniquement en ce qui suit, l'élément de support 10 est formé par injection dans l'outil de formage 75 formant une cavité d'injection étanche, d'une matière plastique, la couche 5 étant disposée contre l'une des surfaces de la cavité d'injection. Dans le deuxième mode de réalisation, l'élément de support 10 est donc formé et simultanément revêtu par la couche 5.

Bien que le procédé de revêtement selon l'invention est décrit dans son application à un élément de garnissage de véhicule automobile, le procédé s'applique également à d'autres domaines, tels que des meubles, des agencements intérieurs, des bateaux ou des agencements d'avion.

En appliquant le procédé de revêtement selon l'invention, on évite un mauvais positionnement de la couche 5 de matériau ligneux par rapport à l'élément de support 10 et on obtient un élément de garnissage de bonne qualité. En particulier, l'adhésion entre l'élément de support 10 et la couche de matériau ligneux 5 est améliorée et homogène sur toute la zone de revêtement 30. En outre, on garantie un aspect esthétique satisfaisant de la pièce obtenue sur toute la zone de revêtement 30.

## Revendications

1. Procédé de revêtement d'une surface (7) d'un élément de support (10) par une couche (5) de matériau ligneux pour former un élément de garnissage, comprenant les étapes successives suivantes :
- prédécouper la couche (5) de revêtement de sorte à former au moins une zone prédécoupée (35) dans la couche (5) de matériau ligneux,
- fixer la couche (5) de matériau ligneux à la surface (7) de l'élément de support (10), et **caractérisé par** l'étape de positionner la couche (5) de matériau ligneux par rapport à l'élément de support (10) au moyen de la zone prédécoupée (35), la couche (5) de matériau ligneux étant fixée à une première partie (80) d'un outil de formage (75) d'un élément de garnissage au moyen de la zone prédécoupée (35) de sorte à maintenir la couche (5) de matériau ligneux en place par rapport à la première partie (80) de l'outil de formage (75).

2. Procédé selon la revendication 1, dans lequel la première partie (80) de l'outil de formage (75) comporte des moyens de fixation (90) et dans lequel la zone prédécoupée (35) comporte une ouverture (70) adaptée pour coopérer avec l'un des moyens de fixation (90).

3. Procédé selon la revendication 2, dans lequel un moyen de fixation (90) présente une forme sensiblement complémentaire de celle de l'ouverture (70), le diamètre dudit moyen de fixation (90) étant supérieur ou égal au diamètre de l'ouverture (70).

4. Procédé selon l'une quelconque des revendications 1 à 3, dans lequel la couche (5) de matériau ligneux est souple et adaptée pour adopter la forme tridimensionnelle de la surface (7) de l'élément de support (10) à revêtir.

5. Procédé selon l'une quelconque des revendications 1 à 4, dans lequel la couche (5) de matériau ligneux est fixée à la surface (7) de l'élément de support (10) par compression ou par thermocompression.

6. Procédé selon l'une quelconque des revendications 1 à 5, dans lequel chaque zone prédécoupée (35) se trouve en dehors d'une zone de revêtement (30) de la couche (5) de matériau ligneux, la zone de revêtement (30) étant destinée à revêtir tout ou partie de l'élément de support (10).

7. Procédé selon l'une quelconque des revendications 1 à 6, dans lequel des zones prédécoupées (35) sont enlevées de la couche (5) de matériau ligneux après fixation de la couche (5) de matériau ligneux à la surface (7) de l'élément de support (10).

8. Procédé selon l'une quelconque des revendications 1 à 6, dans lequel chaque zone prédécoupée (35) n'est pas enlevée de la couche (5) de matériau ligneux après fixation de la couche de matériau ligneux (5) à la surface (7) de l'élément de support (10).

9. Procédé selon l'une quelconque des revendications 1 à 8, dans lequel la zone prédécoupée (35) présente une forme d'oreille séparée de la zone de revêtement (30) par deux fentes (40), la zone prédécoupée (35) étant reliée à la zone de revêtement (30) par une zone de connexion (45) s'étendant entre les fentes (40).

10. Procédé selon l'une quelconque des revendications 1 à 9, dans lequel la couche (5) de matériau ligneux est une couche à base d'un matériau lignocellulosique, un complexe lignocellulosique ou un revêtement comprenant une pluralité de couches à base de matériaux lignocellulosiques.

## Patentansprüche

1. Verfahren zum Abdecken einer Fläche (7) eines Stützelements (10) durch eine Schicht (5) aus Holzmaterial zum Ausbilden eines Verkleidungselements, aufweisend die nachfolgenden Schritte:
- Vorschneiden der Schicht (5) zum Abdecken, um wenigstens einen vorgeschnittenen Bereich (35) in der Schicht (5) aus Holzmaterial auszubilden,
- Befestigen der Schicht (5) aus Holzmaterial an der Fläche (7) des Stützelements (10), und **gekennzeichnet durch** den Schritt des
- Positionierens der Schicht (5) aus Holzmaterial relativ zu dem Stützelement (10) mittels des vorgeschnittenen Bereichs (35), wobei die Schicht (5) aus Holzmaterial an einem ersten Abschnitt (80) eines Werkzeugs zum Formen (75) eines Verkleidungselements befestigt ist mittels des vorgeschnittenen Bereichs (35), um die Schicht (5) aus Holzmaterial in Position relativ zu dem ersten Abschnitt (80) des Werkzeugs zum Formen (75) aufrechtzuerhalten.

2. Verfahren gemäß Anspruch 1, wobei der erste Abschnitt (80) des Werkzeugs zum Bilden (75) Mittel zur Befestigung (90) aufweist, und wobei der vorgeschnittene Bereich (35) eine Öffnung (70) aufweist, die angepasst ist zum Zusammenwirken mit einem der Mittel zur Befestigung (90).

3. Verfahren gemäß Anspruch 2, wobei ein Mittel zur Befestigung (90) eine Form hat, die zu jener der Öffnung (70) im Wesentlichen komplementär ist, wobei der Durchmesser des besagten Mittels zur Befestigung (90) größer oder gleich dem Durchmesser der Öffnung (70) ist.

4. Verfahren gemäß irgendeinem der Ansprüche 1 bis 3, wobei die Schicht (5) aus Holzmaterial im Wesentlichen weich ist und angepasst ist zum Annehmen der dreidimensionalen Form der Fläche (7) des abzudeckenden Stützelements (10).

5. Verfahren gemäß irgendeinem der Ansprüche 1 bis 4, wobei die Schicht (5) aus Holzmaterial an der Fläche (7) des Stützelements (10) befestigt ist durch Pressung oder durch Thermopressung.

6. Verfahren gemäß irgendeinem der Ansprüche 1 bis 5, wobei jeder vorgeschnittene Bereich (35) sich außerhalb eines Abdeckbereichs (30) der Schicht (5) aus Holzmaterial befindet, wobei der Abdeckbereich (30) dazu bestimmt ist, das gesamte oder Teil des Stützelements (10) abzudecken.

7. Verfahren gemäß irgendeinem der Ansprüche 1 bis 6, wobei vorgeschnittene Bereiche (35) von der Schicht (5) aus Holzmaterial entfernt werden nach der Befestigung der Schicht (5) aus Holzmaterial an der Fläche (7) des Stützelements (10).

8. Verfahren gemäß irgendeinem der Ansprüche 1 bis 6, wobei jeder vorgeschnittene Bereich (35) nicht von der Schicht (5) aus Holzmaterial entfernt wird nach der Befestigung der Schicht aus Holzmaterial (5) an der Fläche (7) des Stützelements (10).

9. Verfahren gemäß irgendeinem der Ansprüche 1 bis 8, wobei der vorgeschnittene Bereich (35) eine Laschen-Form hat, welche von dem Abdeckbereich (30) separiert ist durch zwei Spalte (40), wobei der vorgeschnittene Bereich (35) mit dem Bereich zur Abdeckung (30) verbunden ist durch einen Verbindungsbereich (45), der sich zwischen den Spalten (40) erstreckt.

10. Verfahren gemäß irgendeinem der Ansprüche 1 bis 9, wobei die Schicht (5) aus Holzmaterial eine auf einem Holzzellulose-Material basierende Schicht, ein Holzzellulose-Verbund oder eine Abdeckung ist, die eine Mehrzahl von auf Holzzellulose-Materialien basierenden Schichten aufweist.

## Claims

1. A method for coating a surface (7) of a supporting element (10) using a layer (5) of ligneous material to form a trim element, comprising the following successive steps:
- precutting the coating layer (5) so as to form at least one precut area (35) in the layer (5) of ligneous material,
- attaching the layer (5) of ligneous material to the surface (7) of the supporting element (10), and **characterized by** the step of positioning the layer (5) of ligneous material with respect to the supporting element (10) using the precut area (35), the layer (5) of ligneous material being fastened to a first part (80) of a forming tool (75) of a trim element by means of the precut area (35) so as to keep the layer (5) of ligneous material in position with respect to the first part (80) of the forming tool (75).

2. The method according to claim 1, wherein the first part (80) of the forming tool (75) includes fastening means (90) and wherein the precut area (35) includes an opening (70) suitable for cooperating with one of the fastening means (90).

3. The method according to claim 2, wherein one fastening means (90) has a shape substantially complementary to that of the opening (70), the diameter of said fastening means (90) being larger than or equal to the diameter of the opening (70).

4. The method according to any one of claims 1 to 3, wherein the layer (5) of ligneous material is flexible and suitable for adopting the three-dimensional shape of the surface (7) of the supporting element (10) to be coated.

5. The method according to any one of claims 1 to 4, wherein the layer (5) of ligneous material is fastened to the surface (7) of the supporting element (10) by compression or thermocompression.

6. The method according to any one of claims 1 to 5, wherein each precut area (35) is outside a coating area (30) of the layer (5) of ligneous material, the coating area (30) being designed to coat all or part of the supporting element (10).

7. The method according to any one of claims 1 to 6, wherein precut areas (35) are removed from the layer (5) of ligneous material after fastening the layer (5) of ligneous material to the surface (7) of the supporting element (10).

8. The method according to any one of claims 1 to 6, wherein each precut area (35) is not removed from the layer (5) of ligneous material after the layer (5) of ligneous material is attached to the surface (7) of the supporting element (10).

9. The method according to any one of claims 1 to 8, wherein the precut area (35) is in the shape of an ear separated from the coating area (30) by two slits (40), the precut area (35) being connected to the coating area (30) by a connecting area (45) extending between the slits (40).

10. The method according to any one of claims 1 to 9, wherein the layer (5) of ligneous material is a layer with a base of a lignocellulose material, a lignocellulose complex or a coating comprising a plurality of lignocellulose material-based layers.
